Europäisches Patentamt

**European Patent Office**

**Office européen des brevets**

(11) Numéro de publication: **0 132 227**
**B1**

(12) **FASCICULE DE BREVET EUROPEEN**

(45) Date de publication du fascicule du brevet:
**10.12.86**

(21) Numéro de dépôt: **84810331.3**

(22) Date de dépôt: **02.07.84**

(51) Int. Cl.⁴: **E 01 B 29/46**

(54) Machine pour le positionnement correct et la soudure bout à bout de deux extrémités de rails.

(30) Priorité: **05.07.83 CH 3690/83**

(43) Date de publication de la demande:
**23.01.85 Bulletin 85/4**

(45) Mention de la délivrance du brevet:
**10.12.86 Bulletin 86/50**

(84) Etats contractants désignés:
**AT BE CH DE FR GB IT LI LU NL SE**

(56) Documents cités:
**FR - A - 2 456 810**
**GB - A - 2 000 829**
**US - A - 2 216 434**

(73) Titulaire: **RAIL-WEL INC., case postale 4,**
**CH-1024 Ecublens (CH)**

(72) Inventeur: **Georges, Marius, c/o Railtec S.A.,**
**CH-2017 Boudry (CH)**

(74) Mandataire: **Nithardt, Roland, CABINET ROLAND**
**NITHARDT Rue Edouard Verdan 15, CH-1400 Yverdon**
**(CH)**

ACTORUM AG

## Description

On connaît déjà (GB-A-2 000 829) des machines servant au positionnement correct et à la soudure bout à bout de deux extrémités de rails. De telles machines sont en général portées par un véhicule pouvant rouler sur route et sur voie ferrée. Ces machines connues comportent un châssis rigide portant des moyens de préhension prévus pour fixer temporairement ce châssis à l'un des rails qui est préalablement fixé sur des traverses fixes, déjà en place dans le ballast. De telles machines comportent un servo-mécanisme prévu pour déplacer longitudinalement l'autre rail qui est posé librement sur des traverses non encore fixées dans le ballast. La fonction de ce servo-mécanisme est d'amener l'extrémité du second rail à distance correcte de soudage de l'extrémité en regard du premier rail, en exerçant sur le second rail une traction pour le rapporcher ou de refoulement pour l'éloigner du premier rail. Ces machines connues comportent une unité de soudage, par aluminothermie ou électrique, mobile verticalement pour être amenée dans la région des deux extrémités de rails à souder. Toutefois, ces machines connues ont l'inconvénient de n'assurer par le servo-mécanisme que l'une des fonctions du positionnement correct du rail libre. Le réglage en hauteur de l'extrémité à souder du rail libre et le réglage transversal de cette extrémité doivent se faire à la main ou au moyen de crics actionnés à la main ou encore de cales de positionnement.

La présente invention vise à remédier à cet état de choses et elle a pour objet une machine pour le positionnement complet et correct et la soudure bout à bout de deux extrémités de rails, qui est conforme à la revendication 1. D'autres modes de réalisation préférés de l'invention apparaissent dans les sous-revendications. Le dessin annexé représente à titre d'exemple une forme d'exécution de la machine selon l'invention.

Fig. 1 est une vue d'ensemble montrant schématiquement cette forme d'exécution de la machine suspendue à un bras de grue porté par un véhicule présentant des roues à pneumatiques et des roues de wagons de chemin de fer, pouvant être amenées à volonté les unes ou les autres en position de travail.

Fig. 2 est une vue latérale schématique de cette forme d'exécution de la machine.

Fig. 3 est une vue en plan avec coupe partielle correspondant à la fig. 2.

Fig. 4 est une vue en coupe selon 4-4 de fig. 2.

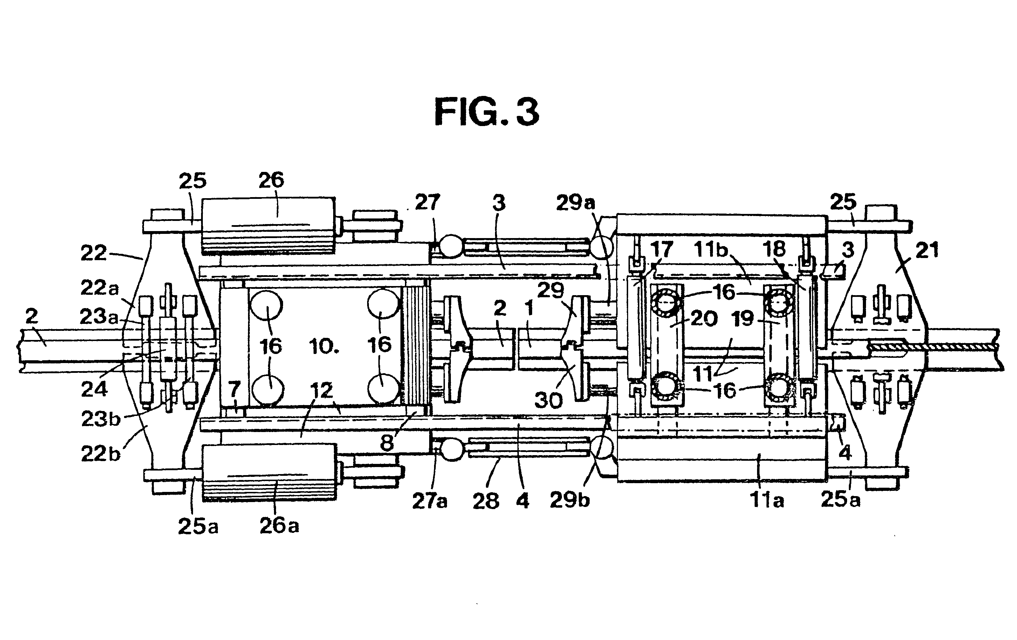

On voit en 1 l'extrémité d'un rail déjà fixé en position de travail sur des traverses non représentées, elles-mêmes déjà fixées dans le ballast. On voit en 2 l'extrémité d'un autre rail qui est posé librement sur la voie, c'est-à-dire sur des traverses auxquelles il n'est pas fixé et qui ne sont pas en place dans le ballast. Ce sont les extrémités en regard (fig. 3) de ces deux rails qu'il s'agit d'amener en position correcte de soudage, puis de souder.

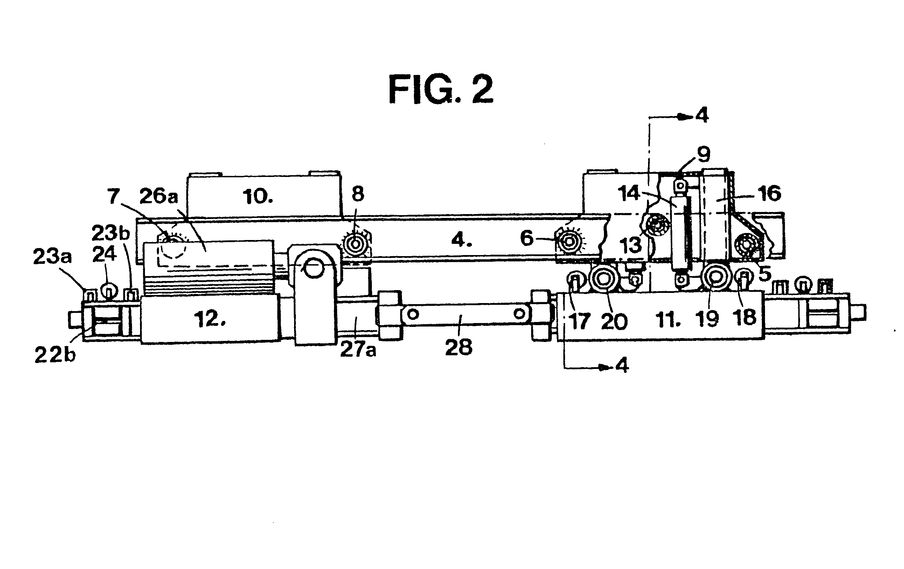

Sur la fig. 2 on n'a pas représenté les rails parce qu'ils se confondraient en grande partie avec des organes de la machine, ce qui rendrait la figure peu intelligible.

La machine représentée comprend un cadre rigide formé de deux longerons 3, 4, parallèles reliés rigidement l'un à l'autre par quatre entretoises transversales 5, 6, 7, 8. Ces entretoises sont disposées par paires situées chacune près de l'une des extrémités des longerons. Ces quatre entretoises constituent aussi des supports et des guides transversaux pour deux caissons supérieurs 9, 10.

Chacun de ces caissons supérieurs est relié à un caisson inférieur 11, respectivement 12. Comme on le verra plus loin, chaque caisson inférieur et le caisson supérieur correspondant sont déplaçables verticalement l'un par rapport à l'autre. De plus, chaque caisson inférieur est formé de deux parties que l'on décrira en référence au caisson 11, la disposition du caisson 12 étant symétrique. Un servo-mécanisme 13 constitué par un vérin, permet de déplacer le caisson 9 (et il en va de même pour le caisson symétrique 10) par rapport aux longerons, dans la direction transversale par rapport aux rails. L'une des extrémités du vérin 13 est reliée au caisson (à gauche) et l'autre extrémité (à droite) est reliée au longeron 3. On voit donc que le vérin 13 permet de déplacer transversalement le caisson 9 et l'un des guides transversaux 5 et 6.

Un servo-mécanisme constitué par deux vérins verticaux 14, 15 permet de déplacer verticalement l'un par rapport à l'autre le caisson supérieur 9 et le caisson inférieur 11. Chacun de ces vérins est relié par son extrémité supérieure au caisson 9 et, à son extrémité inférieure à une partie du caisson inférieur 11. Quatre guides verticaux 16 assurent le guidage du caisson 9 lors de son déplacement par rapport au caisson 11.

Chaque caisson inférieur tel que 11 est formé de deux parties 11a, 11b mobiles horizontalement pour pouvoir être rapprochées ou écartées l'une de l'autre sous l'action d'un servo-mécanisme comprenant deux vérins 17, 18 disposés horizontalement et parallèlement, selon une direction transversale par rapport aux rails. Ces vérins sont reliés à chacune de leur estrémité à l'une des parties 11a, 11b.

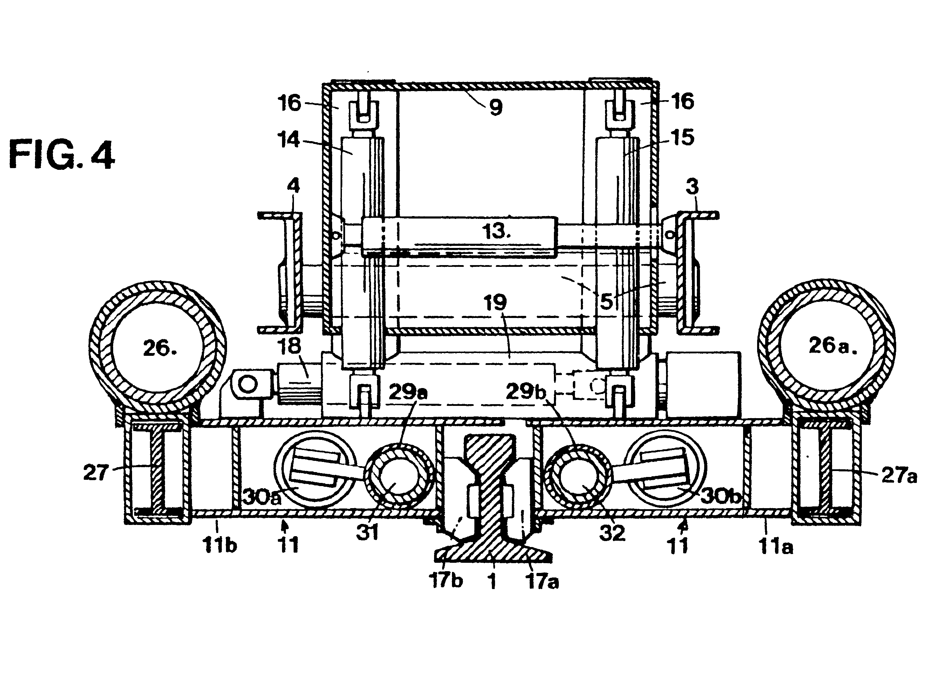

Les parties 11a et 11b forment une pince de préhension de rail. On voit sur la fig. 4 que ces parties 11a, 11b sont prévues pour pincer le rail entre elles, par l'intermédiaire de pinces 17a, 17b conformées selon le profil du rail.

Dans l'exemple représenté où l'on a admis que le rail 1 est fixe, la pince de préhension constituée par le caisson inférieur 11 sert à immobiliser le châssis décrit par rapport à ce rail. La disposition symétrique existant sur le côté opposé de la machine servirait à cette fonction de fixation de la machine par rapport au rail, dans le cas où ce serait le rail 2 qui serait le rail fixe et le rail 1 le rail libre.

Des guides transversaux 19 et 20 assurent que les parties 11a, 11b se déplacent bien parallèlement l'une par rapport à l'autre.

La machine comporte encore à chacune de ses extrémités une pince de traction et refoulement 21, 22. Dans l'exemple représenté, la pince 22 est destinée à coopérer avec le rail libre 2 pour le rapprocher du rail 1 ou au contraire l'éloigner, comme on le verra plus loin, afin d'amener cette extrémité du rail 2 à la distance voulue du rail 1.

Ces deux pinces 21 et 22 sont identiques et on ne décrira que l'une d'elles. La pince 22 comporte deux mâchoires 22a, 22b reliées par deux guides parallèles 23a, 23b entre lesquels est disposé un vérin 24 servant à rapprocher ou à écarter les deux mâchoires l'une de l'autre, pour saisir respectivement lâcher le rail 2. Les mâchoires 21, 22 sont fixées chacune à une partie 25, 25a d'un vérin 26, 26a supporté par le caisson inférieur 12. Des guides 27, 27a permettent d'assurer que le mouvement des deux mâchoires 22a, 22b de la pince 22 s'effectue rigoureusement parallèlement lorsque les vérins 26, 26a agissent sur elles. Une liaison à genouillère 28 est prévue entre les parties 27a et la partie symétrique de droite sur le dessin.

Chacun des caissons inférieurs comporte encore un dispositif d'ébarbage de la soudure. On décrira ce dispositif d'ébarbage en liaison avec la moitié de droite de la fig. 3, l'autre étant symétrique.

Ce dispositif comporte deux couteaux symétriques 29, 30 pouvant glisser sur le rail et portés chacun à l'extrémité d'un guide parallèle à la direction longitudinale des rails. On voit ces guides en 31, 32 sur la fig. 4. Le guide 31 est porté par la partie 11b et le guide 32 par la partie 11a. Les couteaux 29 et 30 sont solidaires d'un manchon 29a, 29b glissant respectivement sur les guides parallèles 31 et 32. Les manchons 29a, 29b sont solidaires de la partie mobile d'un vérin 30a, respectivement 30b, fixé à la partie 11b, respectivement 11a.

Lorsque la soudure est terminée, les couteaux 29, 30 qui sont rapprochés l'un de l'autre, puisque les parties 11a, 11b le sont aussi, sont poussés vers la gauche sur la fig. 3, tout en glissant sur la surface de roulement du rail 1, puis ensuite du rail 2, ce qui coupe et élimine les parties débordantes de la soudure.

Le fonctionnement de la machine représentée est le suivant.

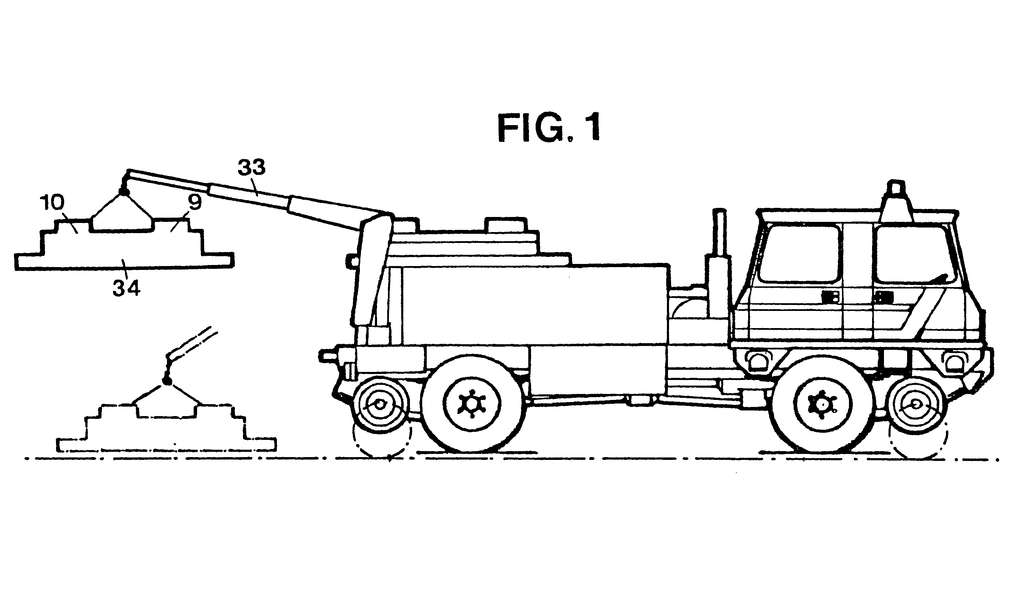

Le rail 1 étant en place fixé sur les traverses de la voie, le rail 2 est posé approximativement dans son prolongement et repose librement sur des traverses non encore fixées dans le ballast. Un véhicule à moteur, tel que celui représenté sur la fig. 1, pouvant rouler sur le terrain ou sur les rails, à volonté, et pourvu d'un bras de grue 33, permet d'amener la machine représentée schématiquement en 34 sur la figure 1, en position de travail, comme représenté en trait mixte sur cette même figure.

Le fonctionnement est dès lors le suivant. On commence par actionner les vérins 17, 18 associés à la partie droite de la machine pour que la pince de préhension constituée par 11a avec 17a et 11b avec 17b vienne saisir et serrer fortement le rail 1, pour constituer l'appui solide qui permettra à la machine d'exercer les différentes forces qu'elle doit développer pour amener l'extrémité du rail 2 exactement en position de soudure vis-à-vis de l'extrémité du rail 1. On procède de même sur la partie symétrique de gauche pour saisir pareillement le rail 2 qui est libre. Ce sont les moyens de préhension de la partie de gauche qui vont permettre maintenant de donner à cette extrémité du rail 2 les mouvements de réglage nécessaires pour la mise en place correcte, verticalement pour l'amener à la même hauteur que l'extrémité du rail 1 et transversalement pour que le plan médian de l'extrémité du rail 2 corresponde avec le plan médian de l'extrémité du rail 1. Pour effectuer le mouvement de rapprochement ou d'éloignement du rail 2, on fait agir les vérins 26 et 26a de la partie gauche de la machine après avoir fermé la pince 22 sur le rail 2. Lorsque le rail a été ainsi amené exactement à la distance voulue du rail 1, on peut procéder au réglage vertical en agissant sur les vérins 14 et 15 de la partie gauche de la machine. Le réglage vertical étant fait, on peut procéder au réglage latéral en agissant sur le vérin 13 jusqu'à ce que les plans médians des deux extrémités de rails coïncident. Ensuite, il ne reste plus qu'à amener l'unité de soudage en regard des extrémités des deux rails 1, 2 pour effectuer de façon classique l'opération de soudage. Ceci étant fait, on termine en ébarbant la surface supérieure de la région soudée au moyen des couteaux 29, 30 que l'on fait se déplacer l'un vers l'autre (fig. 3), en agissant sur les vérins 30a, 30b. Ceci fait, les opérations sont terminées et la machine peut être déplacée sur un autre endroit.

On prévoira de préférence un dispositif de mesure automatique, à contacts électriques, de la position de l'extrémité du rail 2 par rapport à l'extrémité du rail 1. Ce dispositif pourra soit afficher les écarts en distance des deux rails ou les écarts en verticale ou les écarts latéraux et l'opérateur de la machine pourra réduire à zéro ces écarts, en agissant au moyen d'une commande à distance sur les servo-mécanismes respectifs. On prévoira avantageusement que ce dispositif de mesure automatique de la position de l'extrémité du rail 2 soit combiné avec des moyens de commande automatique des servo-mécanismes, afin d'assurer l'amenée automatique de l'extrémité du rail 2 en position correcte.

On remarquera que les moyens de préhension 11a, 11b, avec leurs pinces 17a, 17b, conformées selon le profil du rail ont aussi la fonction d'assurer un quatrième réglage, angulaire, de l'extrémité du rail libre, consistant à obliger cette extrémité à tourner légèrement pour amener son plan médian à coïncider exactement avec celui du rail fixe, dans le cas où un écart angulaire existerait initialement entre ces plans.

Dans l'exemple représenté, la machine est symétrique, ce qui permet de l'utiliser dans un sens d'avancement ou dans l'autre, le long des rails, sans avoir à inverser le sens de la machine. Dans une construction simplifiée, on pourrait ne prévoir qu'un groupe de servo-mécanismes servant au réglage longitudinal, vertical et transversal. Par contre, deux dispositifs de préhension sont toujours nécessaires, l'un pour assurer le point fixe et l'autre pour manoeuvrer le rail dont on veut régler la position.

Dans l'exemple décrit, on a admis que le rail libre est posé sur la voie et l'autre rail fixé aux traverses déjà en place dans le ballast. La machine pourrait aussi être utilisée pour le cas où le rail libre serait à l'extérieur de la voie. Dans ce cas, la machine devrait évidemment prendre appui, pour effectuer les diverses fonctions de réglage, sur un rail fixé au sol autrement que sur des traverses.

**Revendications**

1. Machine (34) pour le positionnement correct et la soudure bout à bout de deux extrémités de rails (1, 2), comprenant un châssis rigide (3-8) portant des moyens de préhension prévus pour fixer temporairement ce châssis à un premier de ces rails (1) lui-même préalablement fixé sur le sol, et un servo-mécanisme (26, 26a) prévu pour déplacer longitudinalement le second de ces rails (2) et amener son extrémité à distance de soudage de l'extrémité en regard du premier rail (1), et comprenant une unité de soudage prévue pour être amenée à volonté dans la région des extrémités de ces rails (1, 2) à souder l'une à l'autre, caractérisée en ce qu'elle comporte au moins deux autres servo-mécanismes (14, 15; 13) agencés pour agir selon deux directions perpendiculaires entre elles et perpendiculaires à la direction d'action du premier servo-mécanisme, le second servo-mécanisme (14, 15) étant agencé pour déplacer l'extrémité à souder du second rail (2) verticalement et le troisième (13) transversalement, par rapport à l'extrémité en regard du rail fixe (1), et l'amener en position correcte de soudage.

2. Machine selon la revendication 1, caractérisée en ce que le châssis (3-8) est de forme rectangulaire et porte deux groupes symétriques de préhension (11, 12, 17a, 17b) et de manoeuvre (21, 22) des rails (1, 2), pour permettre de travailler en avançant selon l'un quelconque des deux sens de la voie sans inverser l'orientation du châssis.

3. Machine selon la revendication 1 ou 2, caractérisée en ce que le châssis (3-8) comprend deux longerons longitudinaux (3, 4) reliés rigidement par deux paires (5, 6; 7, 8) de pièces transversales, chaque paire formant guide et support d'un caisson supérieur (9, 10) mobile transversalement par rapport aux longerons (3, 4; 5, 8) sous la commande du troisième servo-mécanisme (13), qui est relié, d'une part, à l'un des longerons (5) et, d'autre part, au caisson supérieur respectif (9, 10).

4. Machine selon la revendication 3, caractérisée en ce qu'elle comporte, au-dessous de chaque caisson supérieur (9, 10), un caisson inférieur (11, 12) par rapport auquel le caisson supérieur (9, 10) est mobile verticalement, sous la commande du second servo-mécanisme (14, 15), qui est relié, d'une part, au caisson supérieur respectif (9, 10) et, d'autre part, au caisson inférieur respectif (11, 12), des organes de guidage vertical (16) étant prévus sur le caisson supérieur (9, 10).

5. Machine selon la revendication 4, caractérisée en ce que chaque caisson inférieur (11) est formé de deux parties (11a, 11b) mobiles l'une par rapport à l'autre horizontalement selon une direction transversale aux rails, sous la commande d'un quatrième servo-mécanisme (17-18) associé au premier (26, 26a) et qui est relié à ces deux parties, pour les écartes et les rapporcher symétriquement l'une de l'autre, ces deux parties portant l'une des mâchoires (17a, 17b) adaptées à la forme des rails, d'une pince constituant à la fois un moyen de préhension d'un des rails et un moyen de quatrième réglage, angulaire, de l'extrémité du rail libre (1).

6. Machine selon la revendication 5, caractérisée en ce que chacune des parties (11a, 11b) de chaque caisson inférieur (11) porte le premier servo-mécanisme (26. 26a) mentionné, qui comprend deux vérins reliés chacun, d'une part, à une des mâchoires (22a, 22b) d'une pince de traction et de refoulement (22) du rail mobile (2), qui est supportée par et guidée sur l'une de ces parties, et d'autre part, à l'une des deux parties du caisson inférieur, un servo-mécanisme (24) étant prévu pour rapprocher et écarter les deux mâchoires (22a, 22b) de cette pince de traction et de refoulement.

7. Machine selon la revendication 6, caractérisée en ce que chaque caisson inférieur présente des couteaux (29, 30) d'ébarbage de la soudure, qui sont commandés par un cinquième servo-mécanisme (29a, 29b) pour être déplacés longitudinalement par rapport aux rails (1, 2) et au contact de leur surface de roulement, des moyens de guidage (31, 32) de ces couteaux étant prévus sur le caisson inférieur (11, 12).

8. Machine selon la revendication 6, caractérisée en ce que les mâchoires (22a, 22b) de la pince de traction et de refoulement sont de forme symétrique et sont montées à pivot dans leur région médiane, de manière à réaliser un auto-blocage de la pince sur le rail libre, aussi bien lors de la traction que lors du refoulement.

9. Machine selon l'une des revendications précédentes, caractérisée en ce qu'elle comporte un dispositif de mesure automatique de la position de l'extrémité à souder du rail libre par rapport à l'extrémité du rail fixe.

10. Machine selon la revendication 9, caractérisée en ce que le dit dispositif de mesure automatique est combiné avec des moyens de commande automatiques des servo-mécanismes, pour assurer l'amenée automatique de l'extrémité du rail libre en position correcte de soudure par rapport à l'extrémité du rail fixe.

**Patentansprüche**

1. Maschine (34) zum richtigen Positionieren und Aneinanderschweissen von zwei Schienenenden (1, 2), bestehend aus einem starren Rahmen (3-8), der Greifeinrichtungen trägt, die vorgesehen sind, um kurzzeitig diesen Rahmen an eine erste Schiene (1) zu befestigen, die ihrerseits vorher auf dem Boden befestigt ist, und einem Servomechanismus (26, 26a), der vorgesehen ist, um die zweite Schiene (2) in Längsrichtung zu verschieben und ihr Ende auf Schweissabstand vom gegenüberliegenden Ende der ersten Schiene (1) anzuordnen, und die eine Schweisseinheit aufweist, die vorgesehen ist, um sie nach Belieben im Bereich der Enden dieser aneinanderzuschweissenden Schienen (1, 2) anzuordnen, dadurch gekennzeichnet, dass sie mindestens zwei weitere Servomechanismen (14, 15, 13) aufweist, die vorgesehen sind, dass sie gemäss zwei zueinander senkrechten Richtungen und senkrecht zur Bewegungsrichtung des ersten Servomechanismusses arbeiten, wobei der zweite Servomechanismus (14, 15) dazu dient, das anzuschweissende Ende der zweiten Schiene (2) in vertikaler Richtung und der dritte Servomechanismus (13), um es in Querrichtung bezüglich des gegenüberliegenden Endes der befestigten Schiene (1) zu verschieben und es in richtiger Schweisslage anzuordnen.

2. Maschine nach Anspruch 1, dadurch gekennzeichnet, dass der Rahmen (3-8) von rechteckiger Form ist und zwei symmetrische Gruppen zum Greifen (11, 12, 17a, 17b) und zum Manövrieren (21, 22) der Schienen (1, 2) trägt, um ein fortschreitendes Arbeiten gemäss einer beliebigen der zwei Streckenrichtungen zu gestatten, ohne die Ausrichtung des Rahmens umkehren zu müssen.

3. Maschine nach Anspruch 1 oder 2, dadurch gekennzeichnet, dass der Rahmen (3-8) zwei starr durch zwei Paare (5, 6; 7, 8) von Querstücken verbundene Längsträger (3, 4) aufweist, wobei jedes Paar Führung und Träger eines oberen Kastens (9, 10) bildet, der unter Betätigung des dritten einerseits an dem einen der Längsträger (5) und andererseits am jeweiligen oberen Kasten (9, 10) befestigen Servomechanismusses (13) quer zu den Längsträgern (3, 4; 5, 8) beweglich ist.

4. Maschine nach Anspruch 3, dadurch gekennzeichnet, dass sie unter jedem oberen Kasten (9, 10) einen unteren Kasten (11, 12) aufweist, bezüglich welchem der obere Kasten (9, 10) vertikal beweglich ist, unter Betätigung des zweiten Servomechanismusses (14, 15), der einerseits am jeweiligen oberen Kasten (9, 10) und andererseits am jeweiligen unteren Kasten (11, 12) befestigt ist, wobei auf dem oberen Kasten (9, 10) Organe zur vertikalen Führung (16) vorgesehen sind.

5. Maschine nach Anspruch 4, dadurch gekennzeichnet, dass jeder untere Kasten (11) aus zwei in Querrichtung zu den Schienen horizontal zueinander beweglichen Teilen (11a, 11b) gebildet ist, wobei die Betätigung durch einen vierten mit dem ersten (26, 26a) verbundenen Servomechanismus (17-18) geschieht und welcher an diese zwei Teile angeschlossen ist, um sie symmetrisch zueinander weg- oder heranzurücken, wobei jedes dieser zwei Teile eine der an die Schienenform angepassten Klemmbacken (17a, 17b) einer Zange trägt, die gleichzeitig ein Mittel zum Greifen einer der Schienen und ein viertes Einstellmittel für den Winkel des Endes der freien Schiene (1) darstellt.

6. Maschine nach Anspruch 5, dadurch gekennzeichnet, dass jedes der Teile (11a, 11b) von jedem unteren Kasten (11) den erwähnten ersten Servomechanismus (26, 26a) trägt, welcher zwei Hebeböcke aufweist, wovon jeder einerseits an eine der Klemmbacken (22a, 22b) einer Zange (22) zum Heranziehen und Zurückdrücken der beweglichen Schiene (2) angeschlossen ist und die auf eines dieser Teile abgestützt bzw. darauf geführt ist, und andererseits an eines der zwei Teile des unteren Kastens, wobei ein Servomechanismus (24) vorgesehen ist, um die zwei Klemmbacken (22, 22b) dieser Zange zum Heranziehen und Zurückdrücken zusammen- oder auseinanderzudrücken.

7. Maschine nach Anspruch 6, dadurch gekennzeichnet, dass jeder untere Kasten Messer (29, 30) zur Entgratung der Schweissung aufweist, welche durch einen fünften Servomechanismus (29a, 29b) betätigt sind, um sie in Längsrichtung bezüglich der Schienen (1, 2) und in Kontakt mit ihrer Lauffläche zu verschieben, wobei Führungseinrichtungen (31, 32) dieser Messer auf dem unteren Kasten (11, 12) vorgesehen sind.

8. Maschine nach Anspruch 6, dadurch gekennzeichnet, dass die Klemmbacken (22a, 22b) der Zange zum Heranziehen und zum Zurückdrücken von symmetrischer Form und in ihrem mittleren Bereich schwenkbar montiert sind, so dass man sowohl beim Heranziehen als beim Zurückdrücken eine Selbsthemmung der Zange auf der freien Schiene erreicht.

9. Maschine nach einem der Ansprüche 1-8, dadurch gekennzeichnet, dass sie eine automatische Messeinrichtung aufweist für die Lage des anzuschweissenden Endes des Schiene, die bezüglich des Endes der befestigten Schiene noch frei ist.

10. Maschine nach Anspruch 9, dadurch gekennzeichnet, dass die automatische Messeinrichtung mit automatischen Betätigungseinrichtungen der Servomechanismen kombiniert ist, um das automatische Heranführen des Endes der freien Schiene in eine bezüglich des Endes der befestigten Schiene richtige Schweissposition zu gewährleisten.

**Claims**

1. Device (34) for the correct setting and end-to-end welding to two rail extremities (1, 2) comprising a rigid frame (3-8) carrying gripping means provided for temporarily fixing this frame to the first of these rails (1) itself fixed beforehand onto the ground, and a servo-mechanism (26, 26a) provided for moving longitudinally the second of these rails (2) and positioning its end at the required distance from the opposite end of the first rail (1) and comprising a welding unit which can be brought, as required, into the region of the ends of these rails (1, 2) to be welded to each other characterized in that it comprises at least zwo other servo-mechanisms (14, 15; 13) provided for acting in two mutually perpendicular directions, these directions being perpendicular to the action direction of the first servo-mechanism, the second servo-mechanism (14, 15) being provided for moving the welding end of the second rail (2) vertically and the third servo-mechanism (13) being provided for moving the said end transversely, relative to the opposing end of the fixed rail (1) and bring it into the correct welding position.

2. Device according to claim 1, characterized in that the fram (3-8) is of a rectangular shape and carries two symmetrical groups for gripping (11, 12, 17a, 17b) and for driving (21, 22) the rails (1, 2) so as to allow operation while moving forward in either of the two directions of the track without reversing the orientation of the frame.

3. Device according to claims 1 or 2, characterized in that the frame (3-8) comprises two longitudinal members (3, 4) which are rigidly connected to each other by two pairs (5, 6; 7, 8) of cross-pieces, each forming a guide and support for an upper casing (9, 10) movable transversely relative to the longitudinal members (3, 4; 5,8) under the control of the third servo-mechanism (13) which is connected on the one hand to one of the longitudinal members (15) and the other hand to the respective upper casing (9, 10).

4. Device according to claim 3, characterized in that it comprises, below each upper casing (9, 10) a lower casing (11, 12) relative to which the upper casing (9, 10) is movable vertically, under the control of the second servo-mechanism (14, 15) which is connected, on the one hand, to the respective lower casing (11, 12) vertical guiding elements (16) being provided on the upper casing (9, 10).

5. Device according to claim 4, characterized in that each lower casing (11) is constituted by two parts (11a, 11b) movable horizontally relative to each other in a direction transverse to the rails, under the control of a fourth servo-mechanism (17, 18) which is associated with the first servo-mechanism (26, 26a) and connected to these two parts so as to move them away from each other and towards each other in a symmetrical manner, these two parts each carrying one of the grips (17a, 17b) adapted to the shape of the rails, of a clamp constituting both a means for gripping one of the rails and a means for performing a fourth, angular, adjustment of the end of the free rail (1).

6. Device according to claim 1, characterized in that each of the parts (11a, 11b) of each lower casing (11) carries the first mentioned servo-mechanism (26, 26a) which comprises two jacks each connected, on the one hand, to one of the grips (22a, 22b) of a pulling and pushing clamp (22) of the movable rail (2) which is supported by and guided on one of these parts, and on the other hand to one of the two parts of the lower casing, a servo-mechanism (24) being provided for moving the two grips (22a, 22b) of this pulling and pushing clamp towards each other and away from each other.

7. Device according to claim 6, characterized in that each lower casing has cutters (29, 30) for burning the weld seam, which are controlled by a fifth servo-mechanism (29a, 29b) so as be moved longitudinally relative to the rails (1, 2) and in contact with their travelling surface, means (31, 32) for guiding these cutters being provided on the lower casing (11, 12).

8. Device according to claim 6, characterized in that the grips (22a, 22b) of the pulling and pushing clamp are of a symmetrical shape and are mounted so as to pivot in their middle region, so as to achieve self locking of the clamp on the free rail both during pulling and during pushing.

9. Device according one the preceding claims, characterized in that it comprises an automatic measuring device of the position of the welding end of the rail relative to the end of the fixed rail.

10. Device according to claim 9, characterized in that the said automatic measuring device is combined with automatic means for controlling the servo-mechanisms, so as to ensure that the end of the free rail is automatically brought into the correct welding position relative to the end of the fixed rail.

FIG. 1

# FIG. 2

0 132 227

# FIG. 3

**FIG. 4**

0 132 227